# EUROPÄISCHE PATENTSCHRIFT

(11) **EP 2 205 810 B1**
(45) Veröffentlichungstag und Bekanntmachung des Hinweises auf die Patenterteilung: **16.03.2011**
(21) Anmeldenummer: 08802787.5
(22) Anmeldetag: 04.10.2008
(51) Int. Cl.: E04H 9/02, E04B 1/24

(54) **BEFESTIGUNGSWINKEL**
ANGLE BRACKET
ÉQUERRE DE FIXATION

(30) Priorität: 26.10.2007 DE 102007051285
(43) Veröffentlichungstag der Anmeldung: 14.07.2010
(73) Patentinhaber: fischerwerke GmbH & Co. KG, 72178 Waldachtal (DE)
(72) Erfinder: SPIETH, Hannes, 70794 Filderstadt (DE)
(86) Internationale Anmeldenummer: PCT/EP2008/008406
(87) Internationale Veröffentlichungsnummer: WO 2009/052935

(56) Entgegenhaltungen:
- WO-A-2005/007999
- GB-A- 2 268 993
- JP-A- 2002 256 709
- US-A- 2 146 333
- US-A- 2 557 578
- US-A1- 2004 007 652

## Beschreibung

Die Erfindung betrifft einen Befestigungswinkel gemäß dem Patentanspruchs 1.

Ein Befestigungswinkel, der einen ersten Befestigungsschenkel und einen zweiten Befestigungsschenkel umfasst, ist aus der JP2002256709 bekannt. Die beiden Befestigungsschenkel sind miteinander an ihren Enden so verbunden, dass zwischen ihnen ein Winkel von 90 Grad ausgebildet ist, und sie sind zusätzlich über einen Bogenabschnitt miteinander verbunden. Der Bogenabschnitt verstärkt die Verbindung zwischen den beiden Befestigungsschenkeln und kann außerdem etwas nachgeben, wenn sich die Befestigungsschenkel relativ zueinander verbiegen. Der Befestigungswinkel ist speziell zur Befestigung von zwei senkrecht aufeinander stehenden Streben eines Gebäudeskeletts vorgesehen, wobei die Befestigungsschenkel jeweils durch Nägel an einer der Streben befestigt sind. Eine Schlaufe läuft jeweils um eine der Streben und einen der Befestigungsschenkel, um die Verbindung zwischen dem jeweiligen Befestigungsschenkel und der jeweiligen Strebe zu verstärken. Der Befestigungswinkel ist daher besonders widerstandsfähig gegenüber Erschütterungen, wie sie durch Erdbeben und Stürme verursacht werden.

Ein Nachteil liegt darin, dass der Befestigungswinkel zur Erreichung einer hohen Widerstandsfähigkeit gegenüber Erschütterungen lediglich auf einer erhöhten Festigkeit beruht. Der Befestigungswinkel kann nur eine geringe Energie der Erschütterungen durch eine geringfügige elastische Verformung binden. Bei Überschreiten einer maximal zulässigen Verformung wird die Verbindung des Befestigungswinkels mit den beiden Streben schlagartig brechen.

Ähnliche Befestigungswinkel sind aus den Dokumenten WO 2005/007999 A1, US 2,146,333 und GB 2 268 993 A bekannt. Die Offenlegungsschrift US 2004/ 0007652 A1 zeigt einen Befestigungswinkel gemäß dem Oberbegriff des Anspruch 1, der zur Erhöhung seiner Tragfähigkeit ein Versteifungselement aufweist.

Der vorliegenden Erfindung liegt die Aufgabe zugrunde, einen Befestigungswinkel zu schaffen, der schockartige Stöße dämpfen kann, wie sie in Verbindung mit Erdbeben auftreten.

Erfindungsgemäß sind der erste Befestigungsschenkel und der zweite Befestigungsschenkel über ein Verformungselement miteinander verbunden, so dass der erste Befestigungsschenkel zu dem zweiten Befestigungsschenkel unter Verformung des Verformungselements verschiebbar ist. In diesem Zusammenhang ist ein Verformungselement ein Element, das sich aufgrund eines schockartigen Stoßes verformt, während die Befestigungsschenkel zunächst nicht verformt werden, so dass diese weiterhin jeweils flach an einem von zwei Objekten anliegen, mit denen sie durch Befestigungselemente wie Nägel und Schrauben verbunden sind, wodurch auf die Befestigungselemente keine Hebelkraft wirkt. Hierdurch wird Energie einer Erschütterung gebunden und es werden gleichzeitig die Befestigungselemente, wie Nägel und Schrauben, geschützt. Wird der Befestigungswinkel beispielsweise zur Sicherung eines Schrankes vor einer Wand gegen Umfallen genutzt, so wird hierdurch gewährleistet, dass weder die Befestigung des Winkels an der Wand noch am Schrank herausgerissen wird noch der Befestigungswinkel selbst versagt.

Das Verformungselement ist als Streckelement ausgebildet. In diesem Zusammenhang ist ein Streckelement ein Verformungselement, das unter einer Zugbeanspruchung länger wird, d.h. eine Einhüllende des Verformungselements wird beispielsweise aufgrund einer Glättung von Wellen oder Bögen wesentlich länger. Eventuell kann das Streckelement unter einer Druckbeanspruchung auch kürzer werden. Ein Streckelement ermöglicht gegenüber einem Verformungselement, welches sich verformt, ohne wesentlich gestreckt zu werden, die Bindung von weitaus mehr Energie, so dass Nägel und Schrauben besonders gut geschützt werden. Dabei kann sich das Streckelement entweder plastisch oder elastisch verformen. Das Streckelement kann auch mehrere Komponenten aufweisen, von denen sich eine nur elastisch und die andere nur plastisch verformt. Das Streckelement kann insbesondere unter Verwendung von Bögen auch so ausgebildet sein, dass es sich nicht nur in einer Ebene strecken kann, sondern sich auch senkrecht zu dieser Ebene strecken kann, indem das Streckelement entlang seiner Länge auf gegenüberliegenden Seiten unterschiedlich gestreckt bzw. gestaucht wird.

Es ist mindestens ein Versteifungselement vorgesehen, um das Streckelement zu versteifen. Das Versteifungselement sorgt dafür, dass das Streckelement bei einer geringen zusätzlichen Belastung nur geringfügig seine Form ändert, so dass die zwei unterschiedlichen Objekte in etwa ihre relativen Lage beibehalten werden. Bei dem genannten Beispiel eines Schrankes führt dies dazu, dass es bei geringen Kräften, wie sie zum Verhindern eines Umkippens bei mehreren herausgezogenen Schubladen übertragen werden müssen, zu praktisch keiner Bewegung des Schrankes kommt. Das mindestens eine Versteifungselement ist so ausgebildet, dass es beim Überschreiten einer bestimmten Verformung des Streckelements reißt, so dass das Streckelement ab dem Überschreiten der Verformung leichter streckbar ist. Das Streckelement kann sich nun leichter plastisch verformen. Hierdurch wird weitere Energie der Erschütterung vermehrt gebunden und gleichzeitig werden Befestigungselemente wie Nägel und Schrauben, mit denen die Befestigungsschenkel jeweils an unterschiedlichen Objekten angebracht sind, noch besser geschützt. Für das Beispiel des Schrankes bedeutet dies, dass dieser im Falle eines Erdbebens zwar etwas kippt, aber nicht umfällt. Alternativ kann sich auch die Verbindung zwischen dem Versteifungselement und dem Streckelement lösen, ohne dass das Versteifungselement reißt.

Zudem weist das Streckelement einen Bogen auf. In diesem Zusammenhang ist ein Bogen dadurch charakterisiert, dass er in einer gewissen Richtung gekrümmt ist, d.h. in einem bestimmten Uhrzeigersinn ausschließlich entweder nach links oder nach rechts gerichtet ist, und dass er vollständig zum Streckelement gehört. Ein solcher Bogen lässt sich einfach aus einem Blech herstellen und hat eine bevorzugte Richtung, in welcher er verformbar ist. Das Versteifungselement ist bevorzugt innerhalb des Bogens angeordnet. In dieser Anordnung kann das Versteifungselement eine Verformung des Bogens besonders effektiv verhindern.

Das Streckelement weist mindestens noch einen weiteren Bogen auf, und innerhalb des mindestens einen weiteren Bogens ist auch ein Versteifungselement angeordnet. Mehrere Bögen ermöglichen es, die einzelnen Bögen zu verkleinern und gleichzeitig eine erwünschte Streckung in Abhängigkeit von einer angelegten Kraft zu erreichen. Dadurch wird der Zugang zu den Befestigungsschenkeln verbessert, so dass die Befestigungselemente leichter gehandhabt werden können.

In einer bevorzugten Ausführungsform ist ein weiteres Versteifungselement zwischen einem der Bögen und dem ersten Befestigungsschenkel angeordnet, und noch ein weiteres Versteifungselement ist zwischen einem der Bögen und dem zweiten Befestigungsschenkel angeordnet. Dabei handelt es sich bei einem Streckelement mit einem Bogen um denselben Bogen. Der Befestigungswinkel kann bis zum Reißen der Versteifungselemente besonders steif ausgebildet werden.

In noch einer Weiterbildung der bevorzugten Ausführungsform werden die Versteifungselemente von einer Ebene geschnitten. In einer derartigen Anordnung können die Versteifungselemente besonders dünnwandig ausgebildet werden, so dass sie leicht zerreißbar sind und überdies eine hohe Steifigkeit vor dem Zerreißen bewirken.

In noch einer Weiterbildung der bevorzugten Ausführungsform sind der erste Befestigungsschenkel, der zweite Befestigungsschenkel und das Streckelement einstückig ausgebildet. Ein solcher Befestigungswinkel kann ohne großen Aufwand aus Blech hergestellt werden.

In einer alternativen Weiterbildung der bevorzugten Ausführungsform sind die Versteifungselemente einstückig mit dem ersten Befestigungsschenkel, dem zweiten Befestigungsschenkel und dem Streckelement ausgebildet. Ein solcher Befestigungswinkel kann ohne großen Aufwand durch Spritzguss hergestellt werden.

In einer bevorzugten Ausführungsform weist das Verformungselement mindestens zwei Fließgelenke auf. Im Sinn der Erfindung ist ein Fließgelenk ein Abschnitt des Verformungselements, der sich aufgrund seiner besonderen Ausbildung entweder ausschließlich oder zumindest bevorzugt verformt. Ein Befestigungswinkel mit solch einem Fließgelenk kann besonders einfach und somit kostengünstig aus einem leistenförmigen Blech hergestellt werden.

Die Erfindung wird nachfolgend anhand der Zeichnungen näher beschrieben.

Es zeigen:
- Fig. 1A: eine perspektivische Ansicht eines Befestigungswinkels gemäß einer ersten Ausführungsform, die nicht Teil der Erfindung ist.
- Fig. 1 B: eine weitere perspektivische Ansicht des Befestigungswinkels aus Fig. 1 A;
- Fig. 2A: eine Schnittansicht eines weiteren Befestigungswinkels gemäß der ersten Ausführungsform in einem ungestreckten Zustand;
- Fig. 2B: eine Schnittansicht des weiteren Befestigungswinkels gemäß der ersten Ausführungsform in einem gestreckten Zustand;

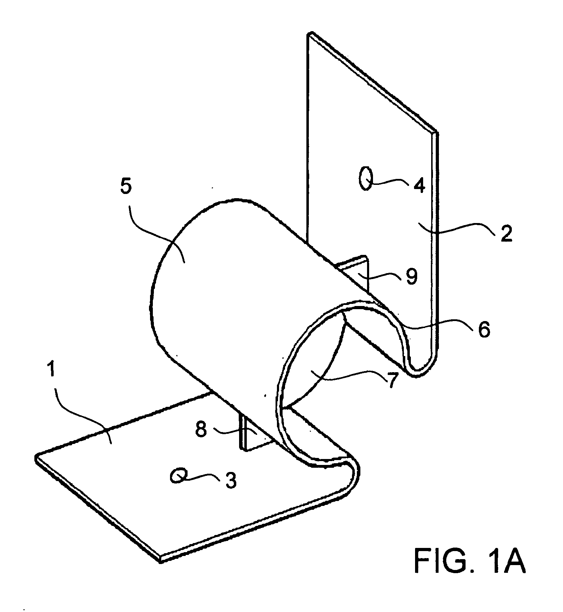

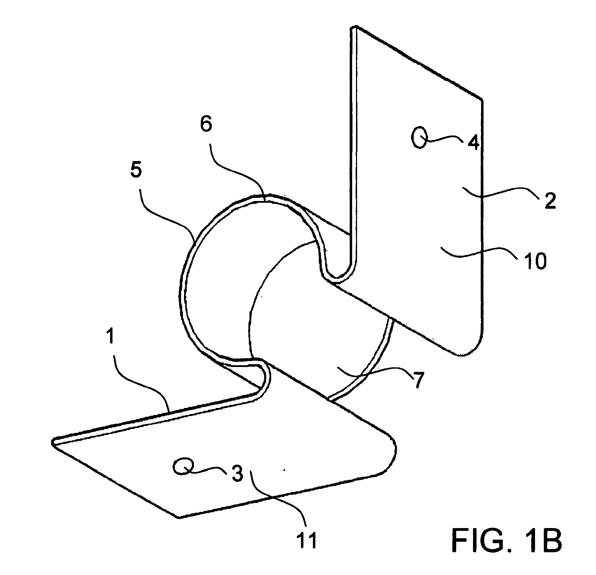

Fig. 1A und Fig. 1B zeigen perspektivische Ansichten eines Befestigungswinkels, der nicht Teil der Erfinding ist. Der Befestigungswinkel umfasst einen ersten Befestigungsschenkel 1 und einen zweiten Befestigungsschenkel 2. Die Befestigungsschenkel 1, 2 sind rechtwinkelig zueinander angeordnet und weisen jeweils eine flache Auflagefläche 10 bzw. 11 auf. In den Befestigungsschenkeln 1, 2 ist jeweils ein Loch 3, 4 zur Einführung eines Befestigungselements wie eines Nagels oder einer Schraube vorgesehen. Statt eines Lochs können auch mehrere Löcher vorgesehen sein. Die beiden Befestigungsschenkel 1, 2 sind über ein Streckelement 5, das einen Bogen 6 aufweist, miteinander verbunden. Im Inneren des Bogens 6 ist ein Versteifungselement 7 vorgesehen. Zwischen dem ersten Befestigungsschenkel 1 und dem Bogen 6 und dem zweiten Befestigungsschenkel 2 und dem Bogen 6 sind weitere Versteifungselemente 8 bzw. 9 vorgesehen. Die Versteifungselemente 7, 8, 9 sind in einer Ebene angeordnet und wandflächig ausgebildet. Die beiden Befestigungsschenkel 1, 2 und das Streckelement 5 sind einstückig ausgebildet und können beispielsweise aus einem Grobblech gefertigt sein. Die Versteifungselemente 7, 8, 9 sind ebenfalls aus Blech und an die beiden Befestigungsschenkel 1, 2 und das Streckelement 5 angefügt. Die beiden Befestigungsschenkel 1, 2, das Streckelement 5 und die Versteifungselemente 7, 8, 9 können auch im Spritzgussverfahren einstückig hergestellt sein.

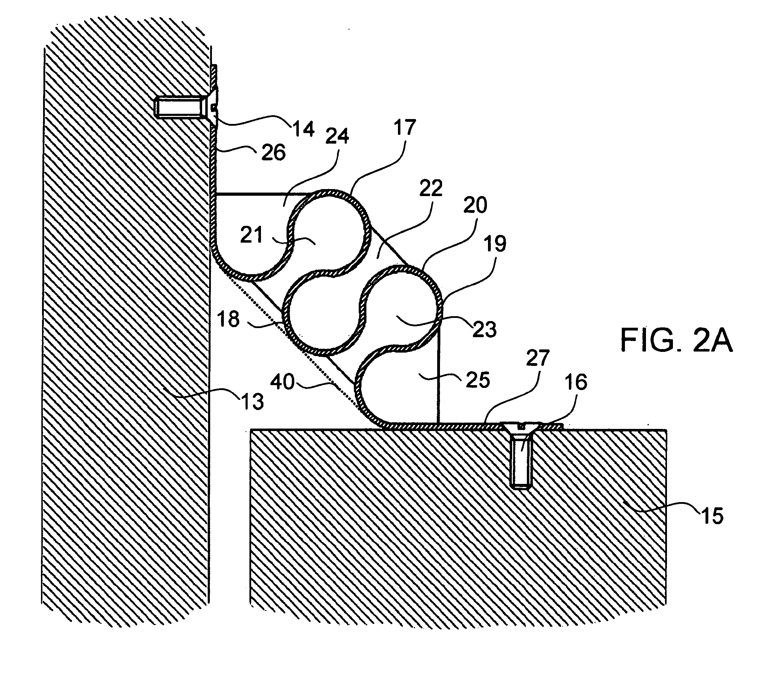

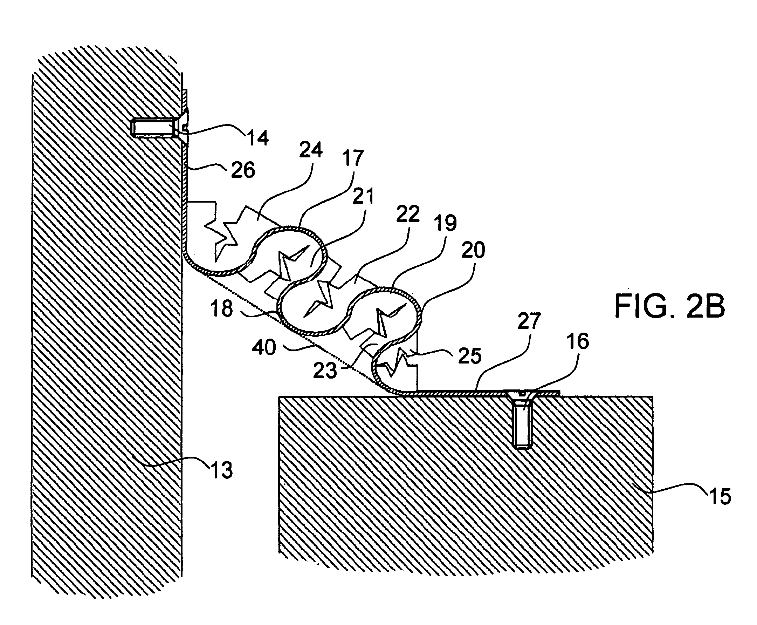

Fig. 2A zeigt eine Schnittansicht eines weiteren Befestigungswinkels gemäß einer Ausführungsform in einem ungestreckten Zustand. Der erste Befestigungsschenkel 26 ist mittels einer Schraube 14 an einer Wand 13 befestigt. Der zweite Befestigungsschenkel 27 ist mittels einer Schraube 16 an einem Einbauschrank 15 befestigt. Die Auflageflächen der Befestigungsschenkel 26, 27 liegen an der Wand 13 bzw. dem Einbauschrank 15 an. Das Streckelement 20 des weiteren Befestigungswinkels weist mehrere Bögen 17, 18, 19 und mehrere Versteifungselemente 21, 22, 23, 24, 25 auf. Ansonsten unterscheidet sich der weitere Befestigungswinkel nicht von dem Befestigungswinkel aus Fig. 1A und Fig. 2B. Die Versteifungselemente 21, 22, 23, 24, 25 sind also ebenfalls in einer Ebene angeordnet und wandförmig ausgebildet. Eine Einhüllende 40 berührt den Bogen 18.

Fig. 2B zeigt eine Schnittansicht des weiteren Befestigungswinkels gemäß der einer Ausführungsform in einem gestreckten Zustand. Der zweite Befestigungsschenkel 27 ist relativ zu dem ersten Befestigungsschenkel 26 aufgrund einer Erschütterung, die durch ein Erdbeben ausgelöst wurde, verschoben. Bis zu einer bestimmten Belastung, für welche die Versteifungselemente 21, 22, 23, 24, 25 und 26 intakt sind, verformte sich der Befestigungswinkel kaum, d.h. zunächst rein elastisch, dann elastisch-plastisch. Diese Belastung wurde jedoch überschritten, so dass die wandförmigen Versteifungselemente 21, 22, 23, 24, 25 und 26 angerissen sind. Die Bögen 17, 18, 19 konnten nun leichter gestreckt und plastisch verformt werden. Die Energie der Erschütterung wurde durch eine plastische Verformung der Bögen 17, 18, 19 gebunden. Die Schrauben 14 und 16 wurden daher geschützt und nicht ausgerissen, so dass die Befestigung des Einbauschranks 15 an der Wand 13 weiterhin intakt ist. Die Einhüllende 40 wurde aufgrund einer Glättung der Bögen 17, 18, 19 wesentlich länger.

## Patentansprüche

1. Befestigungswinkel mit einem ersten Befestigungsschenkel (1, 26) und einem zweiten Befestigungsschenkel (2, 27),
- wobei der erste Befestigungsschenkel (1, 26) und der zweite Befestigungsschenkel (2, 27) über ein Verformungselement (5, 20) miteinander verbunden sind, so dass der erste Befestigungsschenkel (1, 26) zu dem zweiten Befestigungsschenkel (2, 27) unter Verformung des Verformungselements (5, 20) verschiebbar ist,
- wobei das Verformungselement (5, 20) als Streckelement (5, 20) ausgebildet ist,
- wobei mindestens ein Versteifungselement (7, 8, 9, 21, 22, 23, 24, 25) vorgesehen ist, um das Verformungselement (5, 20) zu versteifen, und
- wobei das mindestens eine Versteifungselement (7, 8, 9, 21, 22, 23, 24, 25) so ausgebildet ist, dass es beim Überschreiten einer bestimmten Verformung des Verformungselements (5, 20) reißt, so dass das Verformungselement (5, 20) ab dem Überschreiten der Verformung leichter streckbar ist, wobei
das Verformungselement (5, 20) einen Bogen (6, 17, 18, 19) aufweist und das Versteifungselement (7, 21, 22, 23) innerhalb des Bogens (6, 17, 18, 19) angeordnet ist, **dadurch gekennzeichnet**
- **dass** das Verformungselement (5, 20) mindestens noch einen weiteren Bogen (6, 17, 18, 19) aufweist, und
- **dass** auch innerhalb des mindestens einen weiteren Bogens (6, 17, 18, 19) ein Versteifungselement (7, 21, 22, 23) angeordnet ist.

2. Befestigungswinkel nach Anspruch 1, **dadurch gekennzeichnet, dass** ein weiteres Versteifungselement (8, 24) zwischen einem der Bögen (6, 17) und dem ersten Befestigungsschenkel (1, 26) angeordnet ist, und dass noch ein weiteres Versteifungselement (9, 25) zwischen einem der Bögen (6, 19) und dem zweiten Befestigungsschenkel (2, 27) angeordnet ist.

3. Befestigungswinkel nach Anspruch 1 oder 2, **dadurch gekennzeichnet, dass** die Versteifungselemente (7, 8, 9, 21, 22, 23, 24, 25) von einer Ebene geschnitten werden.

4. Befestigungswinkel nach Anspruch 1, **dadurch gekennzeichnet, dass** der erste Befestigungsschenkel (1, 26), der zweite Befestigungsschenkel (2, 27) und das Verformungselement (5, 20) einstückig ausgebildet sind.

5. Befestigungswinkel nach Anspruch 1, **dadurch gekennzeichnet, dass** das mindestens eine Versteifungselement (7, 8, 9, 21, 22, 23, 24, 25) einstückig mit dem ersten Befestigungsschenkel (1, 26), dem zweiten Befestigungsschenkel (2, 27) und dem Verformungselement (5, 20) ausgebildet sind.

## Claims

1. Fixing bracket having a first fixing leg (1, 26) and a second fixing leg (2, 27),
- wherein the first fixing leg (1, 26) and the second fixing leg (2, 27) are connected to one another by way of a deformation element (5, 20) so that, with deformation of the deformation element (5, 20), the first fixing leg (1, 26) is displaceable relative to the second fixing leg (2, 27),
- wherein the deformation element (5, 20) is in the form of a stretching element (5, 20),
- wherein at least one stiffening element (7, 8, 9, 21, 22, 23, 24, 25) is provided in order to stiffen the deformation element (5, 20); and
- wherein the at least one stiffening element (7, 8, 9, 21, 22, 23, 24, 25) is so constructed that it ruptures when a particular deformation of the deformation element (5, 20) is exceeded, so that the deformation element (5, 20) is more readily stretchable once the deformation has been exceeded,
- wherein the deformation element (5, 20) has a curved part (6, 17, 18, 19), and the stiffening element (7, 21, 22, 23) is arranged within the curved part (6, 17, 18, 19),
**characterised in that**
- the deformation element (5, 20) has at least one further curved part (6, 17, 18, 19); and
- **in that** a stiffening element (7, 21, 22, 23) is also arranged within the at least one further curved part (6, 17, 18, 19).

2. Fixing bracket according to claim 1, **characterised in that** a further stiffening element (8, 24) is arranged between one of the curved parts (6, 17) and the first fixing leg (1, 26); and **in that** another further stiffening element (9, 25) is arranged between one of the curved parts (6, 19) and the second fixing leg (2, 27).

3. Fixing bracket according to claim 1 or 2, **characterised in that** the stiffening elements (7, 8, 9, 21, 22, 23, 24, 25) are cut from one plane.

4. Fixing bracket according to claim 1, **characterised in that** the first fixing leg (1, 26), the second fixing leg (2, 27) and the deformation element (5, 20) are of integral construction.

5. Fixing bracket according to claim 1, **characterised in that** the at least one stiffening element (7, 8, 9, 21, 22, 23, 24, 25) is of integral construction together with the first fixing leg (1, 26), the second fixing leg (2, 27) and the deformation element (5, 20).

## Revendications

1. Equerre de fixation comprenant une première aile de fixation (1, 26) et une seconde aile de fixation (2, 27),
- lesdites première aile de fixation (1, 26) et seconde aile de fixation (2, 27) étant reliées l'une à l'autre par l'intermédiaire d'un élément déformable (5, 20), de telle sorte que ladite première aile de fixation (1, 26) puisse être déplacée vis-à-vis de ladite seconde aile de fixation (2, 27) par déformation dudit élément déformable (5, 20),
- ledit élément déformable (5, 20) étant réalisé sous la forme d'un élément étirable (5, 20),
- au moins un élément de rigidification (7, 8, 9, 21, 22, 23, 24, 25) étant prévu pour rigidifier ledit élément déformable (5, 20), et
- ledit élément de rigidification (7, 8, 9, 21, 22, 23, 24, 25), prévu au minimum, étant conçu de manière à se rompre lors du dépassement d'une déformation déterminée de l'élément déformable (5, 20), de façon telle que ledit élément déformable (5, 20) puisse être plus aisément étiré à partir du dépassement de la déformation,
- ledit élément déformable (5, 20) présentant un cintre (6, 17, 18, 19), et
- ledit élément de rigidification (7, 21, 22, 23) étant logé à l'intérieur dudit cintre (6, 17, 18, 19), **caractérisée par le fait**
- **que** l'élément déformable (5, 20) présente encore au moins un cintre supplémentaire (6, 17, 18, 19), et
- **qu'**un élément de rigidification (7, 21, 22, 23) est logé également à l'intérieur dudit cintre supplémentaire (6, 17, 18, 19) prévu au minimum.

2. Equerre de fixation selon la revendication 1, **caractérisée par le fait qu'**un élément supplémentaire de rigidification (8, 24) est interposé entre la première aile de fixation (1, 26) et l'un (6, 17) des cintres ; et **par le fait qu'**un élément supplémentaire de rigidification (9, 25) est additionnellement interposé entre la seconde aile de fixation (2, 27) et l'un (6, 19) desdits cintres.

3. Equerre de fixation selon la revendication 1 ou 2, **caractérisée par le fait que** les éléments de rigidification (7, 8, 9, 21, 22, 23, 24, 25) sont coupés par un plan.

4. Equerre de fixation selon la revendication 1, **caractérisée par le fait que** la première aile de fixation (1, 26), la seconde aile de fixation (2, 27) et l'élément déformable (5, 20) sont réalisés d'un seul tenant.

5. Equerre de fixation selon la revendication 1, **caractérisée par le fait que** l'élément de rigidification (7, 8, 9, 21, 22, 23, 24, 25), prévu au minimum, est réalisé d'un seul tenant avec la première aile de fixation (1, 26), la seconde aile de fixation (2, 27) et l'élément déformable (5, 20).
